# EUROPEAN PATENT APPLICATION

(11) **EP 1 691 124 A2**
(43) Date of publication of application: **16.08.2006**
(21) Application number: 06101390.0
(22) Date of filing: 07.02.2006
(51) Int. Cl.: F16L 37/088

(54) **Fluid quick connect with a contamination cover**

(30) Priority: 10.02.2005 US 55281 P
(71) Applicant: ITT MANUFACTURING ENTERPRISES, INC., Wilmington, Delaware 19801 (US)
(72) Inventor: Malone, David S., 48412, Attica (US)
(74) Representative: Dreiss, Uwe

(57) **Abstract**

A contamination cover for a fluid quick connector having a retainer (60) disposed in quick connect housing for releasably latching an endform inserted through an open end into a bore in the housing. The contamination cover (110) is mountable on the housing and has a sealingly engagable width an exterior surface of the endform to sealingly engage the endform at the open end of the housing after the endform has been inserted into not the housing. The contamination cover includes a two part body formed of an inner soft durometer material layer and a second, outer, harder durometer material layer which is joined to the inner layer and which mounts the inner layer and the entire contamination cover on the fluid quick connect housing.

## Description

### BACKGROUND

The present invention relates, in general, to fluid quick connects which couple fluid components and more particularly, to contamination covers for quick connects.

Snap-fit or quick connectors are employed in a wide range of applications, particularly, for joining fluid carrying conduits in automotive and industrial applications. Such quick connectors utilize retainers or locking elements for securing a male connector component, such as a tubular conduit, within a complimentary bore of a female connector component or housing. Such retainers are typically of either the axially-displaceable or radially-displaceable type. The terms "axially-displaceable" or "radially-displaceable" are taken relative to the axial bore through the female component.

In a typical quick connector with an axially displaceable, retainer, the retainer is mounted within a bore in a housing of the female connector component of housing. The retainer has a plurality of radially and angularly extending legs which extend inwardly toward the axial center line of the bore in the housing. A tube or male component to be sealingly mounted in the bore in the female component includes a radially upset portion or flange which abuts an inner peripheral surface of the retainer legs. Seal and spacer members as well as a bearing or top hat are typically mounted in the bore ahead of the retainer to form a seal between the housing and the male fitting when the male fitting is lockingly engaged with the retainer legs in the housing.

Radially displaceable retainers are also known in which the retainer is radially displaceable through aligned bores or apertures formed transversely to the main throughbore in the female component housing. The radially displaceable retainer is typically provided with a pair of depending legs which are sized and positioned to slip behind the radially upset portion or flange on the male conduit only when the male connector or conduit is fully seated in the bore in the female component. This ensures a positive locking engagement of the conduit with the female component as well as providing an indication that the conduit is fully seated since the radially displaceable retainer can be fully inserted into the female component only when the conduit has been fully inserted into the bore in the female component.

In vehicle brake fluid connections, the high pressure brake lines typically employ threaded connections for connecting two high pressure lines together. A male and female threaded connection must be properly aligned and tightened to the specified torque. This involves care in assembly which adds to the overall assembly time.

The assignee of the present invention has previously devised a high pressure fluid quick connect in which an expandable, conical retainer ring is mounted in a conical recess in one end of the quick connect housing. The retainer ring expands and moves radially and angularly outward along the recess upon contact with an enlarged flange or bead on an endform inserted through the open end of the housing to allow the bead to be inserted past the tip end of the retainer ring. The retainer ring then contracts into contact with the outward surface of the endform bead to securely latch the endform in the housing.

While this quick connect arrangement and other quick connects provide an effective latching engagement between an endform and a quick connect housing, a concern still exists that contaminants can enter the open end of the quick connect housing and cause the seal components in the housing, and the retention ring, to potentially erode and fail prematurely.

Thus, it would be desirable to provide an easily installable contamination cover for a fluid quick connect.

### SUMMARY

The present invention is a contamination cover high pressure fluid quick connect useful in attaching a fluid conduit to a mating fluid operative element.

In one aspect, the fluid quick connect fluidically couples an endform having an enlarged annular flange spaced from one end and a fluid operative device. The fluid quick connect includes a housing having a through bore extending between first and second ends. An angular recess is formed in the housing adjacent to at least the first end of the housing, the recess communicating with the bore in the housing.

A retainer is mounted in the recess and is moveable from a first position disposed in interference with the annular flange on an endform inserted through the first end of the housing to a second position by contact with the annular flange on the endform during insertion of the endform in the housing allowing passage of the annular flange past the leading edge of the retainer. The retainer is movable back to the first position after the annular flange on the endform has been inserted past the leading edge of the retainer to latch the endform in the housing.

The retainer is mounted in a conical-shaped recess in the body. The retainer has a conically-shaped body with a through bore. A discontinuity is formed in the conical body and forms first and second expandable ends in the conical body.

In one aspect, a contamination cover means is mountable over an end flange on the housing for sealingly engaging the endform inserted through the first end into the bore into the housing.

The contamination cover means includes a first softer durometer annular member having mounting means for mounting the first member on the end flange of the housing, and an endform sealingly engagable portion, and a second harder durometer member fixable to the first member for retaining the first member on the housing.

Joining means are provided for joining the first and second members. The joining means includes interlocking projections and slots formed on the facing portions of the first and second members.

The present contaminant cover prevents contaminants from entering the open end of the quick connect housing. The cover is easily mounted on the quick connect.

### BRIEF DESCRIPTION OF THE DRAWING

The various features, advantages and other uses of the present invention will become more apparent by referring to the following detailed description and drawing in which:
Fig. 1 is an exploded, perspective view of one aspect of a fluid quick connect;
Fig. 2A is a longitudinal cross-sectional, perspective view of the housing of the fluid quick connect shown in Fig. 1, depicted in a preassembled state;
Fig. 2B and 2C are side cross-sectional views of the process for forming the recess in the quick connect housing;
Fig. 3A and 3B are partial, longitudinal cross-sectional, perspective views of different terminal ends of the housing of the fluid quick connect shown in Fig. 1;
Fig. 4A and 4B are enlarged, side elevational, cross-sectional views showing the movement of the retainer between first and second positions;
Fig. 5 is a longitudinal cross-sectional, perspective view of the fluid quick connect of Fig. 1 depicted in an assembled state;
Fig. 6 is an exterior, perspective view of the assembled fluid quick connect shown in Fig. 5;
Fig. 7 is a longitudinal cross-sectional, perspective view of another aspect of the fluid quick connect of the present invention;
Fig. 8 is a longitudinal, cross-sectional view showing the operation of the release tool of the present invention;
Fig. 9 is an exploded perspective view of one aspect of a contamination cover for a fluid quick connect:;NDLIG>
Fig. 10 is a longitudinal cross-sectional view of the quick connect housing shown in Fig. 9;
Fig. 11 is an enlarged, exploded, perspective view of the contamination cover shown in Fig. 9;
Fig. 12 is an end, perspective view of the assembled contamination cover shown in Fig. 11;
Fig. 13 is a longitudinal cross-sectional view of the assembled contamination cover shown in Fig. 12;
Fig. 14 is a longitudinal cross-sectional view showing the assembly of the contamination cover of Figs. 12 and 13 on the quick connect housing of Figs. 9 and 10; and
Fig. 15 is a perspective, longitudinal, cross-sectioned view of the assembled contamination cover and fluid quick connect depicted in Figs. 9-14.

### DETAILED DESCRIPTION

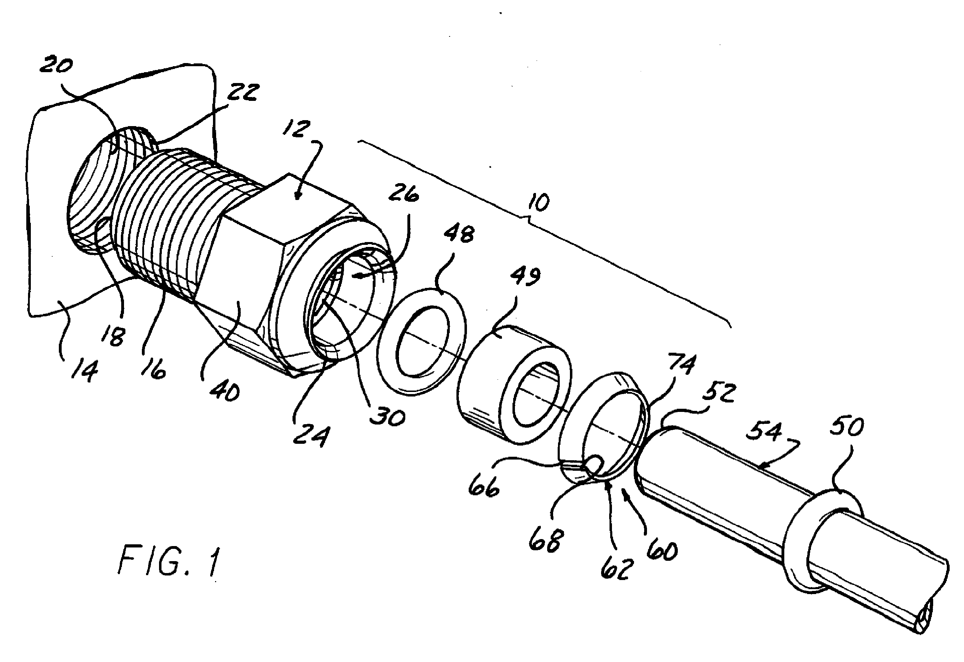

Referring now to the drawing, and to Figs. 1-6 in particular, there is depicted one aspect of a fluid quick connect 10 which maybe employed with the present invention. Although the fluid quick connect 10 may be employed in many diverse high pressure, fluid applications, it will be understood that the following description of the fluid quick connect 10 in a high pressure vehicle brake line application is by way of example only. Further, the term Afluid@ used in connection with the present invention will be understood to encompass any liquid, such as fuel, water, for example, and, also, any gas or vapor.

It will also be understood that although the present contamination cover is employed with a fluid quick connector having a conical retention ring or retainer movably mounted in a recess in one end of the quick connect housing, the contamination cover of the present invention may be employed in other types of fluid quick connects using transverse or axially mountable retainers by providing mateable surfaces between the quick connect housing or retainer and the inventive contamination cover.

The fluid quick connect 10 includes a housing 12 which is attachable to a fluid operative device 14, such as a brake line terminal, caliper, brake fluid reservoir, ABS housing, etc. Although the housing 12 is provided with external threads 16 extending from a first end 18 for threaded attachment with mating threads 20 in a bore 22 in the fluid operative device 14, it will be understood that the fluid quick connect 10 of the present invention may employ a housing which is integrally formed as a one-piece extension of the fluid operative device 14. The housing 12 is formed of a suitable high strength material, such as metal, or a high strength plastic, etc.

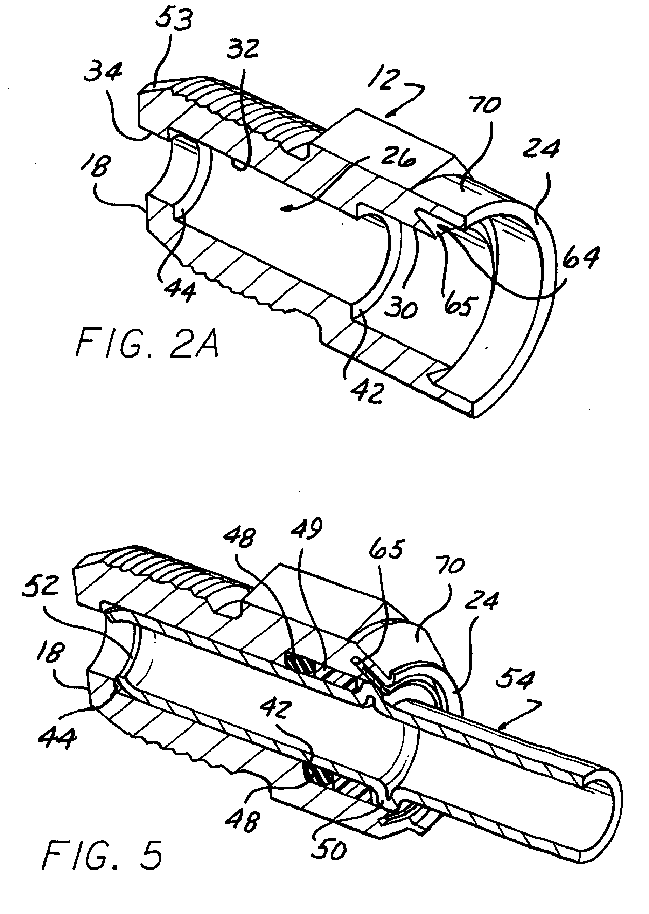

As shown in Fig. 1 and in greater detail in Figs. 2A-5, the housing 12 also includes a second end 24 with a through bore 26 extending completely from the second end 24 to the first end 18.

diameter end bore portion 30, an intermediate, smaller diameter bore portion 32, and a yet smaller diameter second end bore portion 34.

A plurality of flats, such as hex flats 40, are formed externally on the housing 12 adjacent the second end 24. The flats 40 provide for threading attachment of the housing 12 in the bore 22 in the fluid operative device 14. However, it would be understood the provision of the flats 40 is by way of example only as the housing 12 may be effectively utilized without the flats 40.

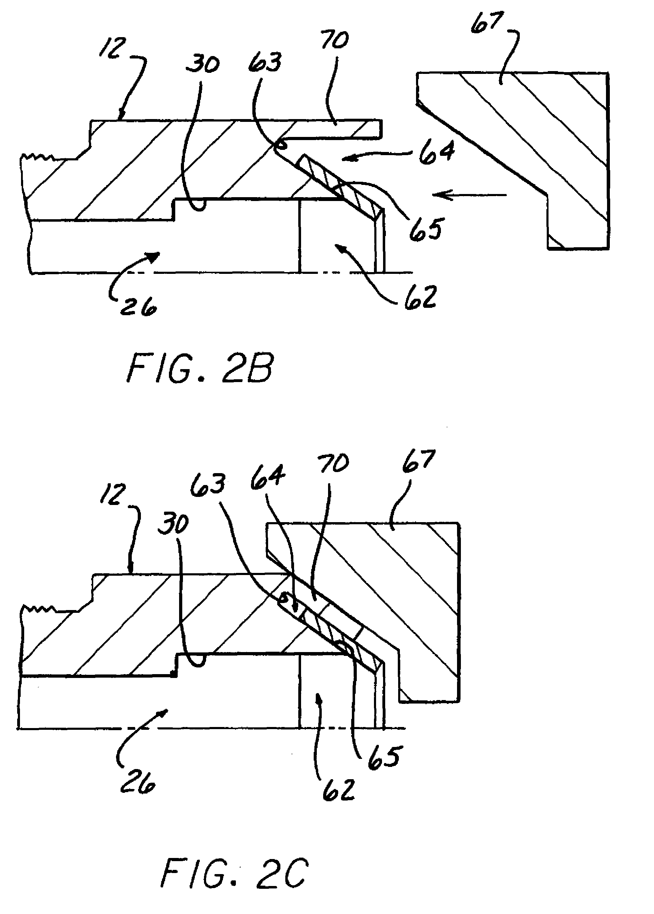

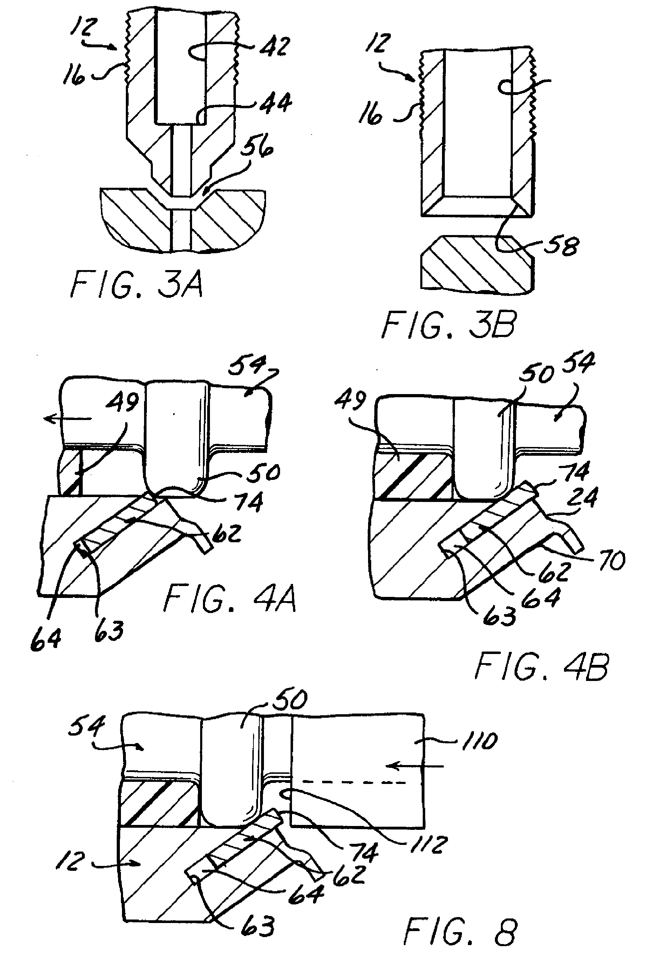

As shown in Figs. 2A, 2B and 4, an annular shoulder or angled flat 42 is formed at the juncture of the first end bore portion 30 and the intermediate bore portion 32. Similarly, a second annular shoulder 44 is formed at the juncture of the other end of the intermediate bore portion 32 and the second end bore portion 34. The first end bore portion 30 is designed to receive at least one seal member 48, such as an O-ring, an optional sleeve or top hat 49, press fit in the bore portion 30 and enlarged, annular flange or bead 50 spaced from a tip end 52 of an endform, tube or conduit 54. The shoulder 42 acts as a seat for insertion of the O-ring 48, the top hat 49, and the annular flange 50, with the top hat 49 acting as an insertion limit or stop for the flange 50 of the endform 54 as shown in Fig. 4. The top hat 49 is press fit in the bore portion 30 to retain the O-ring portion 48 in the bore portion 30.

As shown in Figs. 1, 2, 3A and 3B, the first end 18 of the housing 12 has a conical end shape denoted by reference number 53. Enhanced sealing with a conical seat formed in certain fluid operative devices 14 at the end of the bore 20 may be provided by mating annular surfaces formed on the first end 18 of the housing as shown in Figs. 3A and 3B. In Fig. 3A, the first end of the housing 12 has a machined or precision formed, internal, conical seat 56 designed to mate with a complementary annular conical formed in the fluid use device 14. In Fig. 3B, first end of the housing 12 has an inverted, annular, conical shape surface 58 designed to mate with the external surface of a seat formed in the fluid operative device 14.

The fluid quick connect 10 includes a retainer means 60 formed of a retainer clip 62 movable mounted in an annular recess 64 formed in the first end 18 of the housing 12.

The retainer clip 62 is formed of a suitable spring or resilient material, such as spring metal. As shown in Fig. 1 the retainer clip 62, hereafter referred to simply as the clip 62, has a conical shape with a discontinuity or a split forming first and second ends 66 and 68, respectively. The discontinuity or split allows the first and seconds ends 66 and 68 to spread apart during engagement of the clip 62 with the annular flange 50 on the endform 54 during insertion of the endform 54 into the bore 26 in the housing 12.

The recess 64 is disposed at an angle with respect to the longitudinal axis of the bore 26. One sidewall 70 of the housing 12 forming one side of the recess 64 is initially formed parallel to the longitudinal axis of the bore 26 as shown in the preassembled state of the housing 12 in Figs. 2A and 2B. This allows the clip 62 to be inserted through the first end 24 of the housing 12 into the recess 64, see Fig. 2B.

The sidewall 70 is then formed, such as by swaging, into a conical position generally parallel to the opposed wall 65 of the recess 64, as shown in Figs. 2C, 5 and 6, by advance of a suitably formed tool or die 67. Thus, the walls 70 and 65 are disposed in parallel to define the conical annular recess 64 in which the clip 62 is trapped; but still capable of sliding moving as described hereafter.

The width of the recess 64 is determined by the width of a flat 63 formed at one end of the wall 65 as well as the length of the wall 70. The interface of the tool or die 67 will bend the wall 70 radially inward to the position shown in Fig. 2C wherein the wall 70 is parallel to the wall surface 65 as described above.

The recess 64 as well as the shape of the clip 62 have been defined as being generally conical. However, it will be understood that other shapes, including a polygonal shape, i.e., square, recess, etc., and a complimentary formed clip may also be employed as the angular shape of the recess need only be capable of deforming or bending the resilient material of the clip 62 as the clip 62 moves within the recess 64 by interaction with the annular flange 50 on the endform 54 to cause energy to be stored in the clip 62 by deformation or bending. It is this energy, when released by the sliding insertion of the flange 50 past the leading edge 74 of the clip 62 which will cause the clip 62 to return to its normal position in the recess 64 latching the end form in the housing.

The resiliency of the clip 62 will normally bias the clip 62 to the smallest in-ner diameter with the closest spacing between the first and second ends 66 and 68. This will cause the clip 62 to slide downwardly in the recess 64 until the leading edge 74 projects a short distant outwardly from the open end of the recess 64 in the housing 12 as shown in Fig 2C.

As the tip end 52 of the endform 54 is inserted into the bore 26 in the in the housing 12, the leading edge of the annular flange 50 on the end form 54 will contact the leading edge 74 of the clip 62 and force the clip 62 to slide angularly outward further into the recess 64 as shown in Fig. 4A. This angular sliding movement of the clip 62 is accompanied by a reversible deformation or separation of the first and second ends 66 and 68 which causes energy to be stored in the clip 62 as it is held in the expanded position shown in Fig. 4A within the recess 64 in the housing 12 by contact with the flange 50.

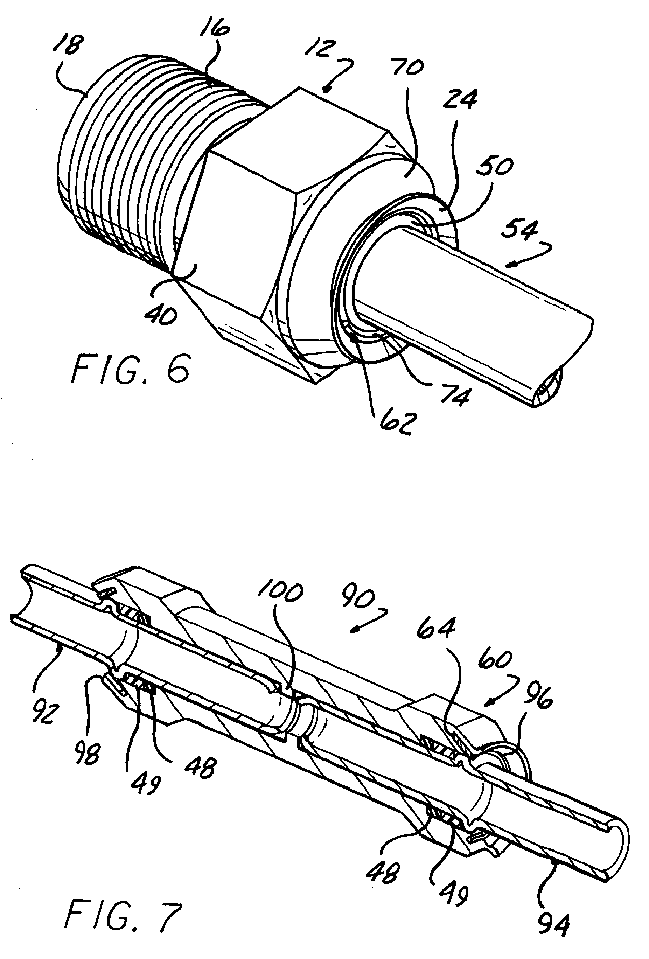

As insertion of the endform 54 into the bore 26 in the housing 12 continues, the outermost surface of the annular flange 50 on the endform 54 will pass beyond the leading edge 74 of the clip 62. At this time, as shown in Fig. 4B, the energy stored in the clip 62 will cause the clip 62 to move downwardly along the recess 64 to its normal position shown in Fig. 5 with the first and second ends 66 and 68 closely spaced. This will in turn cause the leading edge 74 of the clip 62 to move and project outwardly from the open end of the recess 64. At the same time, an inner surface of the clip 62, as shown in Fig. 4B, will be behind against the annular flange 50 on the endform 54 to prevent retraction of the endform 54 from the housing 12.

Referring now to Fig. 7 there is depicted the use of the retainer means 60 in a single point housing 90 designed to fluidly connect two tubular endforms 92 and 94, both of which are constructed substantially identical to the endform 54 in that each has an annular flange spaced from a tip end.

The housing 90 also includes two opposite, co-axial stepped bores extending between and first end 96 and an opposed second end 98. An optional annular, reduced diameter shoulder 100 is formed intermediate to the first and second ends 96 and 98 of the housing 90.

The first and second ends 96 and 98 of the housing 90 include the retainer means 60 described above and shown in Figs. 1 and 5 to securely attach each endform to the housing 90.

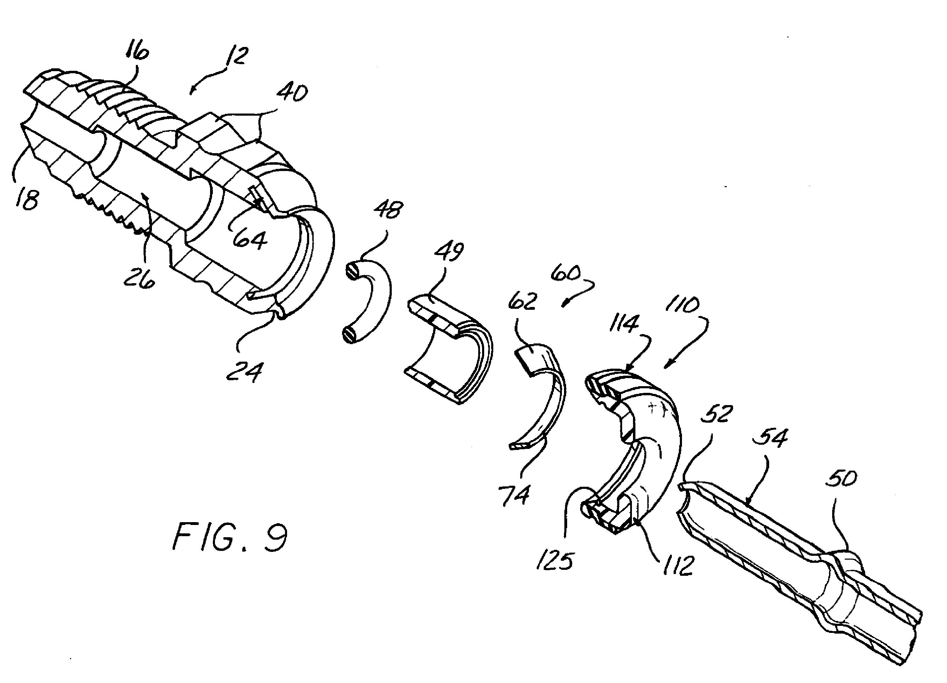

A release tool 110 is shown in Fig. 8, for disengaging the endform 54 from the housing 12 or either of the endforms 92 and 94 from the housing 90. The release tool 110 is in the form a cylindrical member which may be premounted on each endform 54, 92 or 94 or applied after assembly of the endforms to the respective housing by means of a split formed in the release tool 110. A leading edge 112 of the release tool 110 may be formed with a flared outer diameter or as a simple flat edge having a diameter to engage and force the leading edge 74 of the clip 62 angularly outward into the recess 64 in the housing 12 a sufficient distant to allow the leading edge 74 to clear the outer diameter of the flange 50 on the endform 54, for example, and be withdrawn from the housing 12.

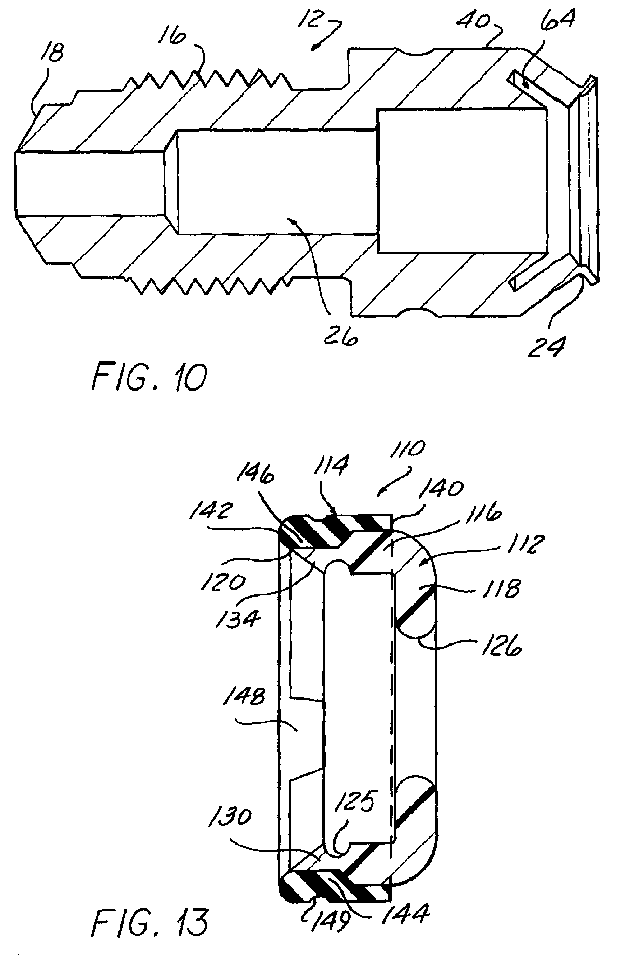

Referring now to Figs. 9-15, there are depicted a unique contamination cover means 110 which maybe mounted on a slightly modified housing 12 of the fluid quick connect 10 described above and shown in Figs. 1-8.

The fluid quick connect utilizes the housing 12, the seal element or O-ring 48 and the top hat 49 which insertably receive the endform 54. The retainer clip 62 is mounted in the conical recess 64 in the housing 12 for releasably latching the bead 50 on the endform 54 in the housing 12, as described above.

The contamination cover means or cap 110 is formed of two separate and discrete, but joinable members including a first inner member 112 and a second outer member 114.

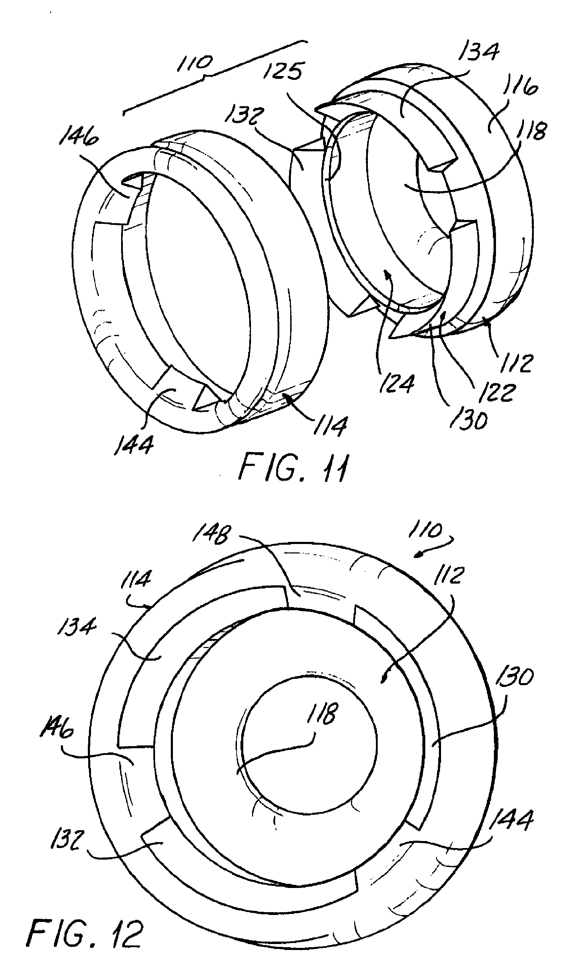

As shown in Figs. 11-15, the first inner member 112 is formed of a soft durometer or resilient material, such as rubber or a rubber-like elastomer. The inner member 112 may be formed as a one-piece body by molding, machining, etc.

The first inner member 112 has a generally annular ring portion 116 which is disposed between a first end portion 118 having a smaller diameter than the inner diameter of the central portion 116 and an opposed second end portion 120 which is formed with first joining means 122 for joining the first inner member 112 to the second outer member 114 as well as second mounting means 124 for mounting the inner member 112 and the entire contamination means or cap 110 on the housing 12.

The inner diameter 126 of the first end 118 of the inner member 112 forms an aperture for receiving the tip end 52 of the endform 54 therethrough. However, the end 126 of the first end 118 has a diameter to snugly engage or seal against the outer surface of the endform 54 to prevent entry of contaminants through the contamination means 110 and into the interior of the housing 12.

The joining means 122 is formed of at least one and preferably a plurality, with three being shown by way of example only, of joining segments 130, 132, and 134 which are circumferentially spaced apart and extend axially from one edge of the central portion of the inner member 112. The joining segments 130, 132, and 134 are circumferentially spaced in a predetermined arrangement complementary to a mating arrangement formed on the outer member 114 as described hereafter.

The joining segments 130, 132, and 134 snugly interlock the inner member 112 with the outer member 114 to form a unitary structure for the contamination means or cap 110.

The mounting means 124 is in the form of a radially extending recess 125 formed on the inner surface of the joining segments 130, 132, and 134. The recess 125 releasably engages the housing 12, as also described hereafter.

The second outer member 114 may be formed as a unitary, one piece layer or body having a generally cylindrical shape with a throughbore extending from a first end 140 to an opposed second end 142. The rigid member 114, which may be formed of a hard plastic, such as polyamide, for example.

The terms "softer durometer" and "harder durometer" are used relative to each other.

At least one, and preferably a plurality of joining segments, with only two joining segments 144 and 146 being depicted in Fig. 11, are formed on an inner diameter of the second end 142 of the outer member 114. The joining segments 144 and 146 are circumferentially spaced apart and sized to snugly fit within the circumferential notches between the joining segments 130, 132, and 134 of the inner member 112 to snugly join the inner member 114 and the outer member 114. The softer durometer material used to form the first member 112, may compress to a slight extent on joinder with the second member 114 to fix the first member 112 in the second member 114.

An annular groove 148 may be formed on the exterior surface of the outer member 114 as a gripping surface to facilitate installation or removal of the contamination means 110.

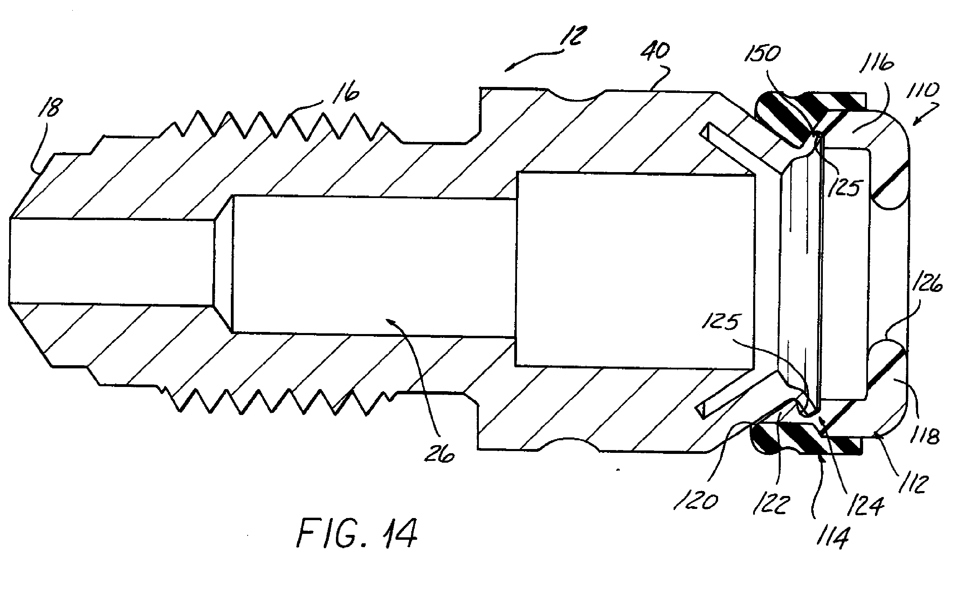

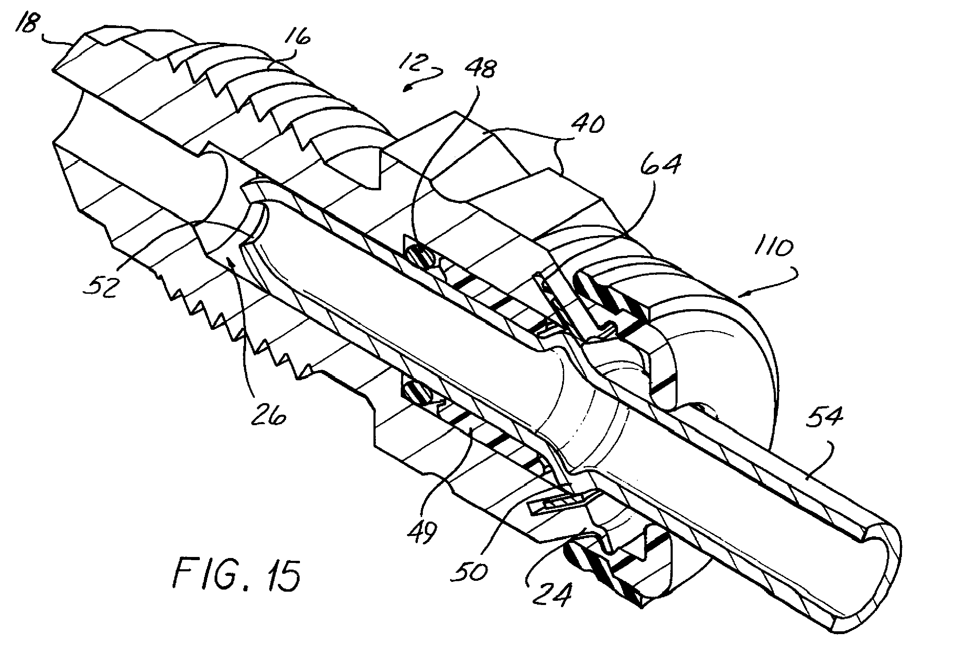

The first end 18 of the housing 12 of the fluid quick connect is formed with an end flange 150 which may extend radially and angularly outward from the first end 18 of the housing 12. The flange 150, which may be a continuous 360E flange or formed of circumferentially spaced segments, engages the recess 125 on the i n-ner member 112 to mount the contamination means 110 on the housing 12. The outer member 114 snaps over the flange 150 to secure the contamination means 110 on the flange 150. In this position, as shown in Figs. 14 and 15, the resilient or softer durometer inner member 112 is positioned to sealingly engage the outer surface of the endform 54 inserted through the bore in the contamination means 110 and the bore 26 in the housing 12 to seal the open first end 18 of the housing 12 from contaminant entry.

It should be noted that while the inner end 126 of the inner member 112 sealingly engages the exterior surface of the endform 54 during insertion and upon full mounting of the endform 54 in the housing 12, the function of the retainer clip 62 is unimpeded in releasably latching the endform 54 in the housing 12.

## Claims

1. A fluid quick connect (10) comprising:
a housing (12) having a first end and a bore extending from the first end;
a retainer (60) mounted in the housing for releasably latching an endform inserted through the first end into the bore in the housing; and
contamination cover means (110), mountable on the housing, for sealingly engaging the endform inserted through the first end into the bore into the housing.

2. The fluid quick connect of claim 1 further comprising:
an end flange at the first end; and
the contamination cover means (110) mounted on the end flange.

3. The fluid quick connect of claim 1 or 2 wherein the contamination cover means comprises:
a first softer durometer annular member having mounting means for mounting the first member on the housing, the first member having an endform sealing engagable portion; and
a second harder durometer member mountable on the first member for retain-ing the first member on the housing.

4. The quick connect of claim 3 further comprising:
joining means for joining the first and second members.

5. The quick connect of claim 4 wherein the joining means further comprises:
interlocking projections and slots formed on facing portions of the first and
second members.

6. The fluid quick connect of claim 3 wherein the first member comprises:
a sealing surface sealing engagable with the endform.

7. The fluid quick connect of claim 6 wherein the first member comprises:
a radially inward lip, the sealing surface carried on the lip.

8. A contamination cover (110) mountable on a fluid quick connector housing for sealing engagement with an endform inserted through an open end of the housing, the contamination cover comprising:
a first softer durometer member having mounting means for mounting the first member on the end flange of the housing, the first member having an endform sealing engagable portion; and
a second harder durometer member mountable on the first member for retai n-ing the first member on the housing.

9. The contamination cover of claim 8 further comprising:
joining means for joining the first and second members.

10. The contamination cover of claim 9 wherein the joining means further comprises:
interlocking projections and slots formed on facing portions of the first and
second members.

11. The contamination cover of claim 8 wherein:
the first member comprises a sealing surface sealing engagable with the endform.

12. The contamination cover of claim 7 wherein:
a radially inward lip, the sealing surface carried on the lip.
